# EUROPEAN PATENT APPLICATION

(11) **EP 4 656 596 A1**
(43) Date of publication of application: **03.12.2025**
(21) Application number: 24747318.4
(22) Date of filing: 24.01.2024
(51) Int. Cl.: C01B 25/027, C04B 7/36, C04B 12/02

(54) **METHOD FOR PRODUCING YELLOW PHOSPHORUS USING WASTE COMBUSTION EXHAUST HEAT**

(30) Priority: 27.01.2023 JP 2023011128
(71) Applicant: Sumitomo Osaka Cement Co., Ltd., Tokyo, 105-8641 (JP)
(72) Inventor: ITAYA, Yuki, Tokyo 105-8641 (JP); KOZAKAI, Noriyuki, Tokyo 105-8641 (JP); OKADA, Yutaka, Tokyo 105-8641 (JP); KUNINISHI, Kenji, Tokyo 105-8641 (JP); MONNO, Takeshi, Tokyo 105-8641 (JP)
(74) Representative: Sonnenberg Harrison Partnerschaft mbB
(86) International application number: PCT/JP2024/001952
(87) International publication number: WO 2024/157991

(57) **Abstract**

A method for producing yellow phosphorus using waste combustion exhaust heat, with which it is possible to form an environmentally excellent circulation cycle particularly suitable for a cement plant or the like and to reduce an environmental burden by using combustion exhaust heat which is obtained by burning a waste and by effectively using, as a cement raw material, a residue discharged in the process of producing yellow phosphorus. The method for producing yellow phosphorus using waste combustion exhaust heat includes a step (1) of adding an acid or an alkali to a phosphorus-containing waste or a phosphate ore to extract crude phosphoric acid from the waste, and using a residue as a cement raw material, a step (2) of adding a reducing agent to the extracted crude phosphoric acid and subjecting the crude phosphoric acid to a dehydration treatment using exhaust heat at 100°C to 300°C, and a step (3) of heating the crude phosphoric acid subjected to the dehydration treatment to 300°C to 1,300°C using exhaust heat from a cement plant to perform a direct reduction treatment and produce yellow phosphorus.

## Description

### Technical Field

The present invention relates to a method for producing yellow phosphorus using waste combustion exhaust heat, and particularly relates to a method for producing yellow phosphorus, with which it is possible to effectively produce yellow phosphorus using a waste containing phosphorus as a raw material and to reduce an environmental burden by using combustion exhaust heat generated from a waste incineration treatment plant or the like.

### Background

In the past, the cement industry has used waste plastics, waste tires, waste oil, waste wood, or the like as a heat energy, and has used coal ash, sludge, sewage sludge incineration ash, blast furnace slag, or the like as a part of a raw material. The cement industry has used a waste as the raw material or the heat energy to produce valuable products, and has made a significant contribution to construction of circular economy.

On the other hand, in cement production, a large amount of carbon dioxide is discharged due to decarbonation of limestone and combustion of heat energy such as coal. Since the carbon dioxide discharged by the decarbonation of the limestone is produced in cement clinker production process, the effective use of the combustion heat is extremely important from the viewpoint of forming a recycling-oriented society, particularly optimizing carbon circulation.

In 2009, J. Rockstrom and others in Sweden propose a concept of the planetary boundary, which is a concept of the accommodation limit of the earth, with an object of scientifically identifying the accommodation capacity (environmental capacity) of the global environment (A safe operating space for humanity. Nature. 461. pp. 472 to 475). Here, as in the case of carbon, a phosphorus and nitrogen cycle is also considered to have exceeded an unstable region (high risk); and in a case of nitrogen, it is considered that the amount of nitrogen fixed from the atmosphere by the ecosystem process and the amount of nitrate nitrogen reduced to gaseous nitrogen returning to the atmosphere are almost balanced, but a large amount of nitrogen compounds are released into the environment as the balance is broken by the production of a large amount of chemical fertilizers (Ministry of the Environment (2018): Environmental White Paper for Fiscal Year 2018. Chapter 1 Trend toward Sustainable Society Leading to Fifth Basic Environment Plan. 7).

In addition, regarding the phosphorus, the above-described literature states that the phosphorus load rate from the land area which may cause the oceanic anoxic event within the next 1,000 years is 11 million tons/year; and in 2015, the phosphorus load rate reaches 22 million tons/year and already exceeds the limit of the earth (Hisao Ohtake (2019): Story of Phosphorus., Asakura Publishing Co., Ltd.).

From such a viewpoint, technical development for optimizing the nitrogen and phosphorus cycle as well as the carbon cycle is an urgent issue.

Meanwhile, the phosphorus is an essential element in our daily life, and for example, many high-purity phosphorus materials (LiPF₆, PCl₃, P₅S₂, condensed phosphoric acid, organic phosphonic acid, and the like) used in a wide range of manufacturing fields such as automobiles, electronic components, pharmaceuticals, and foods are produced using yellow phosphorus as a starting raw material.

The yellow phosphorus is most commonly produced from a phosphate ore by a method of mixing a raw material such as a phosphate ore, a silica stone, and coke in a predetermined proportion, melting and heating the mixture in an electric furnace, and cooling the mixture to obtain a reduced gaseous phosphorus (electric furnace method); and a temperature of approximately 1,300°C to 1,500°C is required for the reaction (Non Patent Literature No. 1). The reaction example is shown below.

### (Reaction example)

4Ca₅(PO₄)₃F + 30C + 21SiO₂ → 3P₄ + 30CO + 20CaSiO₃ + SiF₄

In addition, as the method for producing yellow phosphorus, Japanese Laid-open Patent Publication No. 2012-017230 (Patent Literature No. 1) discloses a method for producing high-purity elemental phosphorus, in which arsenic and antimony can be reduced at once from crude yellow phosphorus containing a large amount of arsenic and antimony as impurities. The method is characterized by performing a contact treatment of liquid crude yellow phosphorus with an iodate-containing compound selected from iodic acid and iodate in an aqueous solvent in the presence of a chelating agent; and the chelating agent is selected from a polycarboxylic acid, a polycarboxylic acid salt, a phosphonic acid, and a phosphonic acid salt.

Furthermore, Japanese Laid-open Patent Publication No. 2020-180040 (Patent Literature No. 2) discloses a method for producing yellow phosphorus, including a raw material supply step of supplying a mixed raw material containing a phosphorus raw material containing phosphorus and a reducing agent containing carbon to a rotating hearth in a rotary hearth furnace, a reduction step of heating the mixed raw material with an indirect heating device in a heating chamber of the rotary hearth furnace to reduce the mixed raw material and produce volatile vapor of phosphorus, and a condensation step of discharging the volatile vapor of phosphorus to outside the rotary hearth furnace and condensing the volatile vapor of phosphorus.

However, in the method for producing yellow phosphorus by the electric furnace method in the related field, since an electric furnace is used, there is a problem in terms of increased corrosion and deterioration of yellow phosphorus production facilities, production cost, and production efficiency.

In addition, the method for producing yellow phosphorus in the related field does not effectively produce the yellow phosphorus without reusing a residue and without using combustion exhaust heat generated by burning a waste or a waste containing phosphorus in a cement plant or the like, and is not a method which can reduce an environmental burden.

### Citation List

### Patent Literature

Patent Literature No. 1: Japanese Laid-open Patent Publication No. 2012-017230
Patent Literature No. 2: Japanese Laid-open Patent Publication No. 2020-180040

### Non Patent Literature

Non Patent Literature No. 1: Dictionary of Phosphorus (Asakura Publishing Co., Ltd., 2017, by Hisao Otake and others)

### Summary of Invention

### Technical Problem

An object of the present invention is to solve the above-described problems, and is to provide a method for producing yellow phosphorus, with which it is possible to form an environmentally excellent circulation cycle suitable for a cement plant or the like and to reduce an environmental burden by using exhaust heat, preferably waste combustion exhaust heat and by using, for example, a waste containing phosphorus as a raw material and effectively using, as a cement raw material, a residue discharged in production of yellow phosphorus.

### Solution to Problem

The present inventors have found a method for producing yellow phosphorus, in which a reducing agent is added to a waste containing phosphoric acid or the like, a calcinating method of directly reducing the waste is used, and exhaust heat such as waste combustion exhaust heat is used, the method being environmentally excellent and capable of reducing an environmental burden.

That is, the method for producing yellow phosphorus according to the present invention, which reduces an environmental burden, is the following method.
(I) The method for producing yellow phosphorus using waste combustion exhaust heat according to the present invention is a method for producing yellow phosphorus using waste combustion exhaust heat, the method including: a step (1) of adding an acid or an alkali to a phosphorus-containing waste or a phosphate ore to extract crude phosphoric acid from the phosphorus-containing waste or the phosphate ore, and using a residue as a cement raw material; a step (2) of adding a reducing agent to the extracted crude phosphoric acid and subjecting the crude phosphoric acid to a dehydration treatment using exhaust heat at 100°C to 300°C; and a step (3) of heating the crude phosphoric acid subjected to the dehydration treatment to 300°C to 1,300°C using exhaust heat to perform a direct reduction treatment and produce yellow phosphorus.
(II) In the method for producing yellow phosphorus using waste combustion exhaust heat according to (I) of the present invention, it is preferable that the exhaust heat is exhaust heat generated by dry distilling a waste to generate a combustible gas and burning the combustible gas, and a residue generated by the dry distillation is used as the cement raw material.
(III) In the method for producing yellow phosphorus using waste combustion exhaust heat according to (I) or (II) of the present invention, it is preferable that the step (1), in a case where the phosphorus-containing waste is used, further includes steps of adding a calcium salt to the phosphorus-containing waste to produce a calcium phosphate using exhaust heat, adding an acid to the waste containing the produced calcium phosphate to extract the crude phosphoric acid, and using a residue as the cement raw material.
(IV) In the method for producing yellow phosphorus using waste combustion exhaust heat according to any one of (I) to (III), it is more preferable that the phosphorus-containing waste is at least one selected from the group consisting of a waste phosphoric acid, a carbonized product (carbonized sludge) of sewage sludge incineration ash, dehydrated cake or sewage sludge, slag, meat and bones powder, a treated product of excreta of domestic animals or human excreta, a by-product of meat processing and a food waste, each of which contains phosphorus.
(V) In the method for producing yellow phosphorus using waste combustion exhaust heat according to any one of (I) to (IV), it is still more preferable that the exhaust heat is exhaust heat generated by incinerating at least one waste selected from the group consisting of waste plastic, waste tires, waste oil, waste wood, coal ash and sludge.

### Advantageous Effects of Invention

The method for producing yellow phosphorus according to the present invention can reduce an environmental burden and is environmentally excellent, in which it is possible to effectively use combustion exhaust heat discharged from a plant or the like, to produce yellow phosphorus by direct reduction from a waste containing phosphorus, and to produce yellow phosphorus with decreased corrosion and deterioration of production facilities by using various reducing agents.

In addition, the yellow phosphorus obtained by the method according to the present invention can be effectively used in fields where yellow phosphorus has been used in the past, such as automobiles, electronic components, pharmaceuticals, and foods, and an environmentally excellent recycling cycle can be obtained.

Furthermore, residues produced by the method for producing yellow phosphorus according to the present invention can be used as a cement raw material in a cement plant or the like, and a cycle in which the residues can be reused can be formed.

In addition, since the combustion exhaust heat discharged from a cement plant or the like can be used as a heat source in the process of producing the yellow phosphorus according to the present invention, exhaust heat gas can also be effectively used in the cement production process or the like.

### Brief Description of Drawings

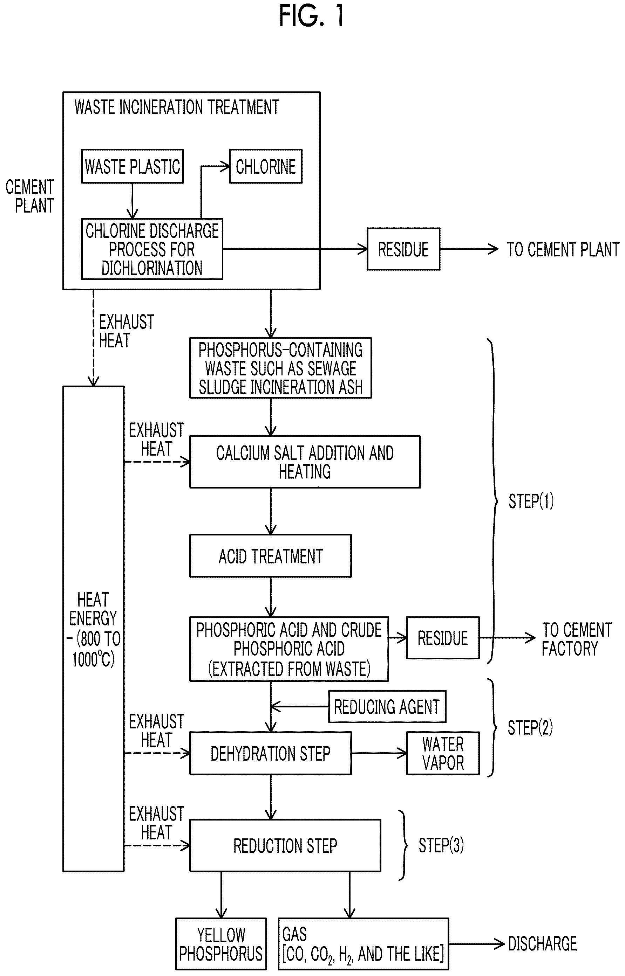

[FIG. 1] A schematic diagram representing an example of an outline of a process of the method for producing yellow phosphorus according to the present invention.

### Description of Embodiments

The present invention will be described below with reference to preferred examples in accordance with FIG. 1, but the present invention is not limited thereto.

The method for producing yellow phosphorus using waste combustion exhaust heat according to the present invention is a method for producing yellow phosphorus, including a step (1) of adding an acid or an alkali to a phosphorus-containing waste or a phosphate ore to extract crude phosphoric acid from the phosphorus-containing waste or the phosphate ore, and using a residue as a cement raw material, a step (2) of adding a reducing agent to the extracted crude phosphoric acid and subjecting the crude phosphoric acid to a dehydration treatment using exhaust heat at 100°C to 300°C, and a step (3) of heating the crude phosphoric acid subjected to the dehydration treatment to 300°C to 1,300°C using exhaust heat to perform a direct reduction treatment and produce yellow phosphorus. The exhaust heat includes exhaust heat obtained by incinerating the waste, and exhaust heat from combustion of a dry-distillation gas which is produced by gasifying the waste by dry distillation.

As shown in FIG. 1, examples of a phosphorus-containing substance which can be used in the method for producing yellow phosphorus according to the present invention, which reduces an environmental burden, include a waste containing phosphorus, a phosphate ore, and phosphoric acid.

As the waste containing phosphorus, for example, the phosphorus-containing waste can be selected from the group consisting of a waste phosphoric acid, a carbonized product (carbonized sludge) of sewage sludge incineration ash, dehydrated cake or sewage sludge, slag, meat and bones powder, a treated product of excreta of domestic animals or human excreta, a by-product of meat processing and a food waste, each of which contains phosphorus; and these can be used alone or in a mixture of two or more thereof.

When the phosphorus is contained in the waste as aluminum phosphate and iron phosphate, it is preferable to add a calcium salt to the phosphorus-containing substance as necessary, and treat the substance by heating, for example, at 750°C to 1,000°C, preferably 850°C to 900°C.

Examples of the calcium salt to be added include calcium oxide, calcium carbonate, and a dried product of concrete slag, and one type of these or a mixture of two or more types of these can be used.

For example, as an example, the phosphorus is contained as aluminum phosphate in the sewage sludge incineration ash, and it is difficult to extract phosphoric acid from such a form. Therefore, it is necessary to convert the aluminum phosphate into calcium phosphate. As a conversion method, the above-described calcium salt is added to the sewage sludge incineration ash and heat-treated. In this manner, the form of aluminum phosphate can be converted into calcium phosphate by the following reaction example.

### (Reaction example)

2Ca₉Al(PO₄)₇ +3CaO → 7Ca₃(PO₄)₂ +Al₂O₃

In the heat treatment, exhaust heat from a plant can be used as described above, and as shown in FIG. 1, the exhaust heat generated by the waste incineration treatment in the plant, for example, the waste treatment plant can be used.

In particular, exhaust heat from the cement plant can be preferably used.

For example, when a waste containing chlorine, such as a waste of a polyvinyl chloride resin, which is a chlorine-containing waste plastic, is used as the cement raw material, an amount of chlorine contained in the cement increases, which is not desirable.

Therefore, as shown in FIG. 1, by providing a chlorine discharge process of heating for dechlorination, the contained chlorine is discharged to the outside of the system, and the chlorine contained in the residue after the incineration is reduced. Accordingly, the residue can be used as the cement raw material in the cement plant. A dry distillation furnace can be used as a chlorine discharge process for dechlorination.

As a result, the incineration residues which have been used as a landfill material in the related field can be used as the cement raw material, and thus the environmental burden can be reduced, thereby enabling environmentally excellent recycling.

In particular, in the cement plant, when producing a cement clinker, the cement raw material is calcined. However, it is desirable that exhaust heat at that time or exhaust heat generated when the cement clinker is calcined is effectively used as the above-described exhaust heat.

In addition, it is also possible to dry-distill the waste to generate a gas and use the exhaust heat obtained by burning the gas. For example, the waste is steam-baked at 300°C to 400°C in a dry distillation furnace to generate a gas, and the gas generated in the dry distillation furnace is burned to be used as exhaust heat having a temperature of 800°C to 900°C.

By using the exhaust heat in this way, it is possible to replace electric power used in the past for the production of yellow phosphorus, and thus it is possible to reduce power consumption and reduce the environmental burden.

An acid or an alkali is added to the above-described phosphorus-containing substance such as the phosphorus-containing waste to extract crude phosphoric acid, or as necessary, a calcium salt is added to the phosphorus-containing substance, the phosphorus-containing substance is heated, and then an acid or an alkali is added to the heated phosphorus-containing substance to extract phosphoric acid (step (1)).

Examples of the acid added to the phosphorus-containing substance for extracting the crude phosphoric acid include hydrochloric acid, nitric acid, and sulfuric acid.

In addition, as the alkali added to the phosphorus-containing substance for extracting the crude phosphoric acid include sodium hydroxide and potassium hydroxide.

The phosphorus-containing waste or the like is reacted by adding and blending the acid or the alkali to the above-described phosphorus-containing waste or the like, and sufficiently stirring at preferably 5°C to 50°C, more preferably 10°C to 40°C, whereby the phosphorus in the phosphorus-containing waste can be obtained as a crude phosphoric acid liquid or a phosphoric acid liquid (hereinafter, referred to as a crude phosphoric acid or the like).

On the other hand, residues other than the crude phosphoric acid or the like can be separated from the crude phosphoric acid or the like by filtering by a known filtration method, and the residues can be used as the cement raw material and can be recycled to the cement plant.

The crude phosphoric acid extraction step (1) is not limited to the above-described method, and any known method can be adopted as long as the method can extract the crude phosphoric acid from the phosphoric acid-containing waste or the like.

Next, a reducing agent is added to the extracted crude phosphoric acid or the like, and the mixture is heated to 100°C to 300°C for dehydration (step (2)).

When the dehydration is insufficient and moisture is present, the produced yellow phosphorus (P₄) reacts with a water molecule to become phosphorus pentoxide (P₂O₅) and hydrogen. Therefore, it is necessary to sufficiently dehydrate the phosphoric acid liquid.

Examples of the reducing agent added and blended with the crude phosphoric acid or the like include sulfites such as ammonium sulfite, potassium sulfite, calcium sulfite, and sodium sulfite; bisulfites such as potassium bisulfite and sodium bisulfite; thiocyanates such as sodium thiocyanate and potassium thiocyanate; sulfides such as sodium sulfide, potassium sulfide, and calcium sulfide; hydrosulfides such as sodium hydrosulfide, potassium hydrosulfide, and calcium hydrosulfide; polysulfides such as sodium polysulfide, potassium polysulfide, and calcium polysulfide; sulfur compounds such as thiolate, sulfur dioxide, and sulfur; metal salts or a hydrate thereof, such as ferrous sulfate, ferric nitrate, and ferric chloride, and trivalent titanium salt; organic compounds such as aldehyde, sugar, formic acid, and ascorbic acid; and high furnace slag powder, peat, semi-coke, iodine, iron powder, and coke. One or two or more of these reducing agents can be blended and used.

The reducing agent is not particularly limited as long as the reducing agent does not affect a temperature range when the dehydration treatment is performed, and the reducing agent is a substance which reduces other substances in an oxidation-reduction reaction and is oxidized itself, and may be a solid or a liquid.

The heating and dehydration treatment is performed at 100°C to 300°C by adding the reducing agent. However, in the heating, as shown in FIG. 1, the exhaust heat generated by the waste incineration treatment in the plant, for example, the waste treatment plant can be used as described above.

In particular, exhaust heat from the cement plant can be preferably used.

For example, in the cement plant, when producing a cement clinker, the cement raw material is calcined. However, it is desirable that exhaust heat at that time or exhaust heat generated when the cement clinker is calcined is effectively used as the exhaust heat.

In addition, it is also possible to dry-distill the waste to generate a gas and use the exhaust heat obtained by burning the gas. For example, the waste is steam-baked at 300°C to 400°C in a dry distillation furnace to generate a gas, and the gas generated in the dry distillation furnace is burned to be used as exhaust heat having a temperature of 800°C to 900°C.

By using the exhaust heat in this way, it is possible to replace electric power used in the past for the production of yellow phosphorus, and thus it is possible to reduce power consumption and reduce the environmental burden.

In addition, by such heating and dehydrating, the contained moisture is discharged to the outside of the system as water vapor.

Next, the dehydrated crude phosphoric acid or the like is heat-treated at 300°C to 1,300°C to perform a direct reduction treatment (step (3)).

As described above, in the present invention, the crude phosphoric acid or the like is subjected to the direct reduction treatment, so that the heat treatment can be performed at a lower temperature than a temperature required in the process of producing yellow phosphorus in the related field. Therefore, the yellow phosphorus can be produced in a temperature region of a normal incinerator instead of the electric furnace in the related field.

Therefore, the corrosion and deterioration of yellow phosphorus production facilities are reduced, and thus the life of the yellow phosphorus production facilities can be extended.

Examples of a direct reduction treatment reaction include the following reaction, and by the direct reduction treatment step (3), the yellow phosphorus can be obtained.

### (Reaction example)

4Ca₅(PO₄)₃F + 30C + 21SiO₂ → 3P₄ + 30CO + 20CaSiO₃ + SiF₄

In the heat treatment, as shown in FIG. 1, the exhaust heat generated by the waste incineration treatment in the plant, for example, the waste treatment plant can be used as described above.

As for such exhaust heat, in the same manner described above, exhaust heat from the cement plant can be preferably used.

In particular, in the cement plant, when producing a cement clinker, the cement raw material is calcined. However, it is desirable that exhaust heat at that time or exhaust heat generated when the cement clinker is calcined is effectively used as the above-described exhaust heat.

In addition, it is also possible to dry-distill the waste to generate a gas and use the exhaust heat obtained by burning the gas. For example, the waste is steam-baked at 300°C to 400°C in a dry distillation furnace to generate a gas, and the gas generated in the dry distillation furnace is burned to be used as exhaust heat having a temperature of 800°C to 900°C.

By using the exhaust heat in this way, it is possible to replace electric power used in the past for the production of yellow phosphorus, and thus it is possible to reduce power consumption and reduce the environmental burden.

As described above, according to the present invention, it is possible to obtain yellow phosphorus by a production method in which an environmental burden is reduced, and a gas such as CO, CO₂, and H₂, which is discharged when the yellow phosphorus is produced, can be treated and exhausted as necessary by a known treatment method.

With the method for producing yellow phosphorus according to the present invention, for example, exhaust heat from a waste incineration plant or the like can be used, and the residue produced can be used as a raw material in a cement plant. Therefore, an environmentally excellent circulation cycle is formed, and the yellow phosphorus can be directly reduced and produced from the phosphorus-containing waste. Accordingly, the method for producing yellow phosphorus is an excellent method for producing yellow phosphorus with reduced environmental burden.

### Industrial Applicability

The exhaust heat discharged from a waste incineration plant or the like, and the residues or the like produced in the yellow phosphorus production process can be reused in the cement plant, so that an environmentally excellent circulation cycle can be formed. Therefore, the production method according to the present invention can be effectively applied in the cement plant.

## Claims

1. A method for producing yellow phosphorus using waste combustion exhaust heat, the method comprising:
a step (1) of adding an acid or an alkali to a phosphorus-containing waste or a phosphate ore to extract crude phosphoric acid from the phosphorus-containing waste or the phosphate ore, and using a residue as a cement raw material;
a step (2) of adding a reducing agent to the extracted crude phosphoric acid and subjecting the crude phosphoric acid to a dehydration treatment using exhaust heat at 100°C to 300°C; and
a step (3) of heating the crude phosphoric acid subjected to the dehydration treatment to 300°C to 1,300°C using exhaust heat from a cement plant to perform a direct reduction treatment and produce yellow phosphorus.

2. The method for producing yellow phosphorus using waste combustion exhaust heat according to Claim 1,
wherein the exhaust heat is exhaust heat generated by dry distilling a waste to generate a gas and burning the gas, and a residue generated by the dry distillation is used as the cement raw material.

3. The method for producing yellow phosphorus using waste combustion exhaust heat according to Claim 1 or 2,
Wherein, the step (1) in a case where the phosphorus-containing waste is used, further comprises steps of adding a calcium salt to the phosphorus-containing waste to produce a calcium phosphate using exhaust heat, adding an acid to the waste containing the produced calcium phosphate to extract the crude phosphoric acid, and using a residue as the cement raw material.

4. The method for producing yellow phosphorus using waste combustion exhaust heat according to Claim 1 or 2,
wherein the phosphorus-containing waste is at least one selected from the group consisting of a waste phosphoric acid, a carbonized product of sewage sludge incineration ash, dehydrated cake or sewage sludge, slag, meat and bones powder, a treated product of excreta of domestic animals or human excreta, a by-product of meat processing and a food waste, each of which contains phosphorus.

5. The method for producing yellow phosphorus using waste combustion exhaust heat according to Claim 1 or 2,
wherein the exhaust heat is exhaust heat generated by incinerating at least one waste selected from the group consisting of waste plastic, waste tires, waste oil, waste wood, coal ash and sludge.
